**Europäisches Patentamt**

**European Patent Office**

**Office européen des brevets**

(11) Veröffentlichungsnummer: **0 163 963**
A2

# (12) EUROPÄISCHE PATENTANMELDUNG

(21) Anmeldenummer: 85105516.0

(22) Anmeldetag: 06.05.85

(51) Int. Cl.⁴: **C 04 B 18/24,** C 04 B 28/14
// (C04B28/14, 18:02, 18:24)

(30) Priorität: 07.05.84 DE 3416824

(43) Veröffentlichungstag der Anmeldung: 11.12.85
Patentblatt 85/50

(84) Benannte Vertragsstaaten: **AT BE CH DE FR GB IT LI LU NL SE**

(71) Anmelder: **Bison-Werke Bähre & Greten GmbH & Co. KG, D-3257 Springe 1 (DE)**

(72) Erfinder: **Hübner, Jochen E., Wolfstalstrasse 4, D-3257 Springe 1 (DE)**

(74) Vertreter: **Säger, Manfred, Dipl.-Ing. et al, Patentanwälte Dipl.-Ing. Otto Flügel Dipl.-Ing. Manfred Säger Postfach 810540, D-8000 München 81 (DE)**

(54) Verfahren zum herstellen von gipsgebundenen Formkörpern.

(57) Mit diesem Verfahren kann bei der Herstellung gipsgebundener Formkörper anfallendes und unverwertbares Abfallmaterial im Prozeßablauf wiederverwendet werden. Der im Abfallmaterial enthaltene und bereits abgebundene Gips wird bei einer Temperatur von ca. 50°C in Halbhydrat umgewandelt. Das gesamte Abfallmaterial einschließlich des Halbhydrats wird in eine feinteilige Form zu einem schüttfähigen Gut übergeführt. Dieses aufbereitete schüttfähige Gut kann dem Ausgangsmaterial als mit diesem gleichwertiges Rohmaterial wieder zugesetzt werden.

bison-werke Bähre & Greten     - 3 -          12.423
GmbH & Co. KG

Die Erfindung betrifft ein Verfahren gemäß dem Oberbegriff
des Hauptanspruchs.

Der Erfindung liegt die Aufgabe zugrunde, ein Verfahren
zum Herstellen gipsgebundener Formkörper der vorgenannten
Art zu schaffen, bei dem das dort anfallende und unverwertbare Abfallmaterial im Prozeßablauf möglichst vollständig
wiederverwendet werden kann.

Diese Aufgabe wird erfindungsgemäß durch den Gegenstand
des Anspruchs 1 gelöst.

Aus Gründen der erhöhten Wirtschaftlichkeit wird der bereits abgebundene Gips des gesamten Abfallmaterials in ein
schüttfähiges Halbhydrat übergeführt, das als mit dem Gips
in dem Ausgangsmaterial im wesentlichen gleichwertiger
Rohstoff in die Ausgangsmischung zum Herstellen der gipsgebundenen Formkörper, insbesondere Platten, eingeht. Das
schüttfähige Abfallmaterial im Sinne der Erfindung ist
praktisch bis auf das Abbindewasser mit der Zusammensetzung
des Ausgangsmaterials vorzugsweise identisch und enthält
somit lignozellulosehaltige und/oder zellulosehaltige und/
oder anorganische Teilchen.

Wiederverwendbar nach dem grundlegenden Lösungsgedanken
der Erfindung sind folgende Abfallmaterialien: Bei der
Besäumung anfallendes Material, vom Plattenaufteilen herrührender Säbestaub, Platten-Schleifstaub und zerkleinerte
Hart-Abfälle wie Plattenbruchstücke oder nicht verwertbare Platten, Restmaterialien einschließlich Gipsstaub (Filter-)
als Ergebnis von Reinigungsarbeiten, bereits gemischtes Ausgangsmaterial, welches zum Beispiel nach einer Betriebsunterbrechung zur Verfügung steht, aber bereits hydratisiert
ist und deshalb nach dem Stand der Technik nicht mehr verwenbar ist.

Weitere Ausgestaltungen und Weiterbildungen des erfindungsgemäßen Verfahrens sind in den Unteransprüchen gekennzeichnet.

Da die Umwandlung des Gipses in dem feinteiligen Abfallmaterial in ein schüttfähiges Halbhydrat in aller Regel
ab einer Temperatur von ca. 50° C erfolgt, ergibt sich ein
geringer Energieverbrauch und eine kurze Behandlungszeit.
Gleichzeitig wird eine Zerstörung, Verbrennung oder Verfärbung von im Abfallmaterial enthaltenen Holz- und dergleichen Teilchen vermieden, denn die Temperaturbedingungen
liegen deutlich unterhalb der Flammpunkte der Zuschlag-
Teilchen.

Das erfindungsgemäße Verfahren ist zum kontinuierlichen
und/oder diskontinuierlichen Herstellen von gipsgebundenen
Formkörpern, insbesondere Platten geeignet und kann darüber
hinaus in Anlagen kleinerer, mittlerer und größerer Kapazität eingesetzt werden.

0163963

bison-werke Bähre & Greten     - 1 -          12.423
GmbH & Co. KG                                  sä/km
3257 Springe 1

---

### VERFAHREN ZUM HERSTELLEN VON GIPSGEBUNDENEN FORMKÖRPERN

---

### PATENTANSPRÜCHE

1. Verfahren zum Herstellen von gipsgebundenen Formkörpern, insbesondere von Platten, nach welchem auf einer Unterlage aus einem Ausgangsmaterial von lignozellulose- und/oder zellulosehaltigen und/oder anorganischen Teilchen, pulverförmigem Gips und Abbindewasser für den Gips in homogener Mischung ein Vlies od. dgl. gebildet wird, das zu den fertigen Formkörpern, insbesondere Platten verpreßt wird, d a d u r c h   g e k e n n z e i c h n e t, daß während der Herstellung anfallendes Abfallmaterial aufbereitet wird, indem

- der darin enthaltene Gips in Halbhydrat übergeführt,
- das gesamte Abfallmaterial einschließlich des Halbhydrats in eine feinteilige Form zu einem schüttfähigen Gut überführt wird,

und das aufbereitete, schüttfähige Gut wieder dem Ausgangsmaterial als mit diesem gleichwertiges Rohmaterial zugesetzt wird.

**0163963**

bison-werke Bähre & Greten     - 2 -        12.423
GmbH & Co. KG

2. Verfahren nach Anspruch 1, d a d u r c h   g e k e n n - z e i c h n e t , daß als Ausgangsmaterial das bei der Plattenbesäumung anfallende Material, vom Plattenaufteilen herrührender Sägestaub, Platten-Schleifstaub und zerkleinerte Hart-Abfälle wie Plattenbruchstücke oder nicht verwertbare Platten, Restmaterialien einschließlich Gipsstaub (Filter-) im Ergebnis von Reinigungsarbeiten eingesetzt wird.

3. Verfahren nach Anspruch 1 oder 2, d a d u r c h   g e - k e n n z e i c h n e t, daß der in dem Abfallmaterial enthaltene abgebundene Gips gesondert in ein schüttfähiges Halbhydrat überführt wird.

4. Verfahren nach einem der Ansprüche 1 bis 3, d a d u r c h g e k e n n z e i c h n e t , daß das schüttfähige Halb- hydrat bzw. das gesamte Abfallmaterial einschließlich des Halbhydrats vor und/oder nach einem Kalziniervorgang gemahlen wird.

5. Verfahren nach einem der Ansprüche 1 bis 4, d a d u r c h g e k e n n z e i c h n e t, daß die Aufbereitung (Kalzi- nierung) des Abfallmaterials im heißen Gasstrom oder bei indirektem Kontakt mit heißen Gasen vorgenommen wird.

6. Verfahren nach Anspruch 5, d a d u r c h   g e k e n n - z e i c h n e t , daß die Aufbereitung des Abfallmaterials in einer Kalzinieranlage erfolgt, die nur hierfür bestimmt ist oder auch dem Kalzinieren von Naturgips, Chemiegips und anderem Gips dient.

7. Verfahren nach Anspruch 5 oder 6, d a d u r c h   g e -

k e n n z e i c h n e t , daß die Umwandlung in ein schüttfähiges Halbhydrat ab 50° C geschieht.

8. Verfahren nach einem der vorhergehenden Ansprüche, d a d u r c h   g e k e n n z e i c h n e t , daß die Aufbereitung des Abfallmaterials im niederen Temperaturbereich so erfolgt, daß hierdurch die anderen Bestandteile des Abfallmaterials weder zerstört noch verbrannt werden.

9. Verfahren nach einem der Ansprüche 1 bis 8, d a d u r c h   g e k e n n z e i c h n e t ,  daß das aufbereitete Material der Ausgangsmischung in beliebigen Mengen dosiert beigegeben wird.

10. Verfahren nach einem der Ansprüche 1 bis 9, d a d u r c h   g e k e n n z e i c h n e t , daß bei der Dosierung des Ausgangsmaterials für die Ausgangsmischung die Gesamtgutmenge entsprechend der Menge an aufbereitetem Halbhydrat verringert wird.

11. Verfahren nach einem der Ansprüche 1 bis 10, bei dem das Ausgangsmaterial aus einer Teilmischung für das Vlies-Mittelschichtgut und aus einer Teilmischung für das Vlies-Deckschichtgut bestehen kann, d a d u r c h   g e k e n n z e i c h n e t , daß das aufbereitete, schüttfähige Halbhydrat dem Deckschichtgut und/oder zumindest zum Teil dem Mittelschichtgut beigegeben wird.

12. Verfahren nach Anspruch 11, d a d u r c h   g e k e n n z e i c h n e t ,  daß die das Vlies bildenden Teilchen auf die Unterlage durch Schütten und/oder Wurfstreuen und/oder Windsichten aufgebracht werden.

0163963

bison-werke Bähre & Greten          - 4 -                    12.424
GmbH & Co. KG


13. Verfahren nach einem der Ansprüche 1 bis 12, d a -
    d u r c h   g e k e n n z e i c h n e t, daß das auf-
    bereitete, schüttfähige Halbhydrat vor dessen Zuführung
    zur Ausgangsmischung zwischengelagert wird.


14. Verfahren nach einem der Ansprüche 1 bis 13, d a -
    d u r c h   g e k e n n z e i c h n e t, daß das
    aufbereitete Halbhydrat während oder nach der Kalzinierung so behandelt wird, daß es als anderweitig einsetzbares Bindemittelgemisch verwertet werden kann.


15. Verfahren nach Anspruch 14, d a d u r c h   g e -
    k e n n z e i c h n e t, daß das aufbereitete Bindemit-
    telgemisch durch separate Zugabe von chemischen Substanzen als Putzspachtel, Fugenfüller oder Befestigungskleber einsetzbar ist.


16. Verfahren nach einem der Ansprüche 1 bis 15, d a -
    d u r c h   g e k e n n z e i c h n e t, daß das Her-
    stellungsverfahren zumindest teilweise kontinuierlich
    und/oder zumindest teilweise diskontinuierlich durchge-
    führt wird.